## Europäisches Patentamt

## European Patent Office

## Office européen des brevets

(19)

(11) Veröffentlichungsnummer: **0 281 735**
**B1**

(12) **EUROPÄISCHE PATENTSCHRIFT**

(45) Veröffentlichungstag der Patentschrift:
**05.12.90**

(51) Int. Cl.⁵: **F16N 29/04**

(21) Anmeldenummer: **88100816.3**

(22) Anmeldetag: **21.01.88**

(54) Anordnung zur Überwachung eines der Schmierung einer Schmierstelle dienenden Oelflusses.

(30) Priorität: **06.02.87 CH 430/87**

(43) Veröffentlichungstag der Anmeldung:
**14.09.88 Patentblatt 88/37**

(45) Bekanntmachung des Hinweises auf die Patenterteilung:
**05.12.90 Patentblatt 90/49**

(84) Benannte Vertragsstaaten:
**CH DE GB IT LI**

(56) Entgegenhaltungen:
**DE-A- 1 901 132**
**FR-A- 918 179**
**FR-A- 1 212 626**
**FR-A- 2 095 339**
**FR-E- 41 007**
**GB-A- 1 457 118**
**US-A- 2 202 817**
**US-A- 2 826 754**

(73) Patentinhaber: **MASCHINENFABRIK RIETER AG,**
**Postfach 290, CH-8406 Winterthur(CH)**

(72) Erfinder: **Clement, Heinz, In Wannen 12,**
**CH-8406 Winterthur(CH)**
Erfinder: **Eichenberger, Hansulrich,**
**Schlosstalstrasse 45, CH-8406 Winterthur(CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

# Beschreibung

Die vorliegende Erfindung bezieht sich auf eine Ueberwachungsanordnung gemäss dem Oberbegriff des Patentanspruchs 1.

Bei Oelschmierungen, insbesondere von Getrieberädern, muss die Oelförderung überwacht werden, da bei Oelmangel hohe Kosten für Reparaturen von Getriebeschäden entstehen können. Die Ueberwachung mit üblichen, in der Praxis verwendeten Druckmessgeräten ist in vielen Fällen schwierig, unzuverlässing, aufwendig und beansprucht viel Platz.

Ein weiterer Nachteil dieser Geräte besteht darin, dass diese den Oeldruck, jedoch nicht den an sich zu überwachenden Oelfluss, feststellen, dessen Vorhandensein an sich der massgebliche, zu überwachende Vorgang ist. Dieser wird von diesen Geräten deshalb nicht mit genügender Zuverlässigkeit erfasst. Bei einer visuellen Ueberwachung mit Schaugläsern ist ein rechtzeitiges Erkennen eines Defekts nicht gewährleistet, da bei dieser Ueberwachungsart die Beobachtung nur intermittierend stattfindet, d.h. während gewissen Zeitabschnitten nicht vorhanden ist.

Bei einer bekannten Ausführung im Beispiel der FR-E 41 007 ist zur Überwachung eines der Schmierung einer Schmierstelle dienenden Ölflusses ein verschiebbarer Stift in einem geraden Endstück einer Rohrleitung angeordnet. Der Stift ist im Bereich des Endstückes einseitig abgeflacht, um beim Verschieben einen Durchtrittsspalt für den Ölfluss zu gewährleisten. Der Kopfteil des Stiftes ist über eine mechanische Verbindung mit einem direkt an das Endstück angeflanschten Detektorelement verbunden.

Diese Ausführung erfordert einerseits einen massgenauen Durchmesser des Stiftes im Bereich des Endstückes sowie eine aufwendige Bauweise des an das Endstück angeflanschten Detektorelementes.

Die US-A 2 826 754 zeigt eine Anordnung, wobei ein längsverschieblicher Bolzen mit einem im Durchmesser vergrösserten Kopfteil zur Anwendung kommt. Es handelt sich hierbei um ein geschlossenes Sicherheitssystem, wobei höhere Drücke zur Auslösung eines Signals, bzw. zur Verschiebung des federbelastet gelagerten Bolzens, notwendig sind.

Der Erfindung liegt nunmehr die Aufgabe zugrunde, eine einfache und sichere Einrichtung zur Überwachung eines der Schmierung einer Schmierstelle dienenden Ölflusses auszubilden und die Nachteile bekannter Ausführungen zu beseitigen.

Diese Aufgabe wird durch den kennzeichnenden Teil des Hauptspruches 1 gelöst.

Vorteilhafte Weiterbildungen der Erfindung sind anhand der nachfolgenden Unteransprüche zu entnehmen.

Die Erfindung liefert bei defekter Pumpe, bei zu kleinem oder fehlendem Oelvorrat oder bei aus andern Gründen unzureichendem Oelfluss eine dem Personal nicht entgehbare Anzeige. Sie besitzt den Vorteil grosser Zuverlässigkeit, da das Fliessen des Oels unmittelbar vor Erreichen der Schmierstelle überwacht wird. Auch benützt sie die ohnehin vorhandene Rohrleitung, welche das Oel zu den zu schmierenden Teilen zuführt, was zu einer einfachen Bauweise der Erfindung beiträgt. Dadurch ergibt sich, zusammen mit der übrigen mechanischen Ausgestaltung, eine erfindungsgemässe Anordnung von grosser Einfachheit.

In den Patentansprüchen und in der Beschreibung wurde durchwegs der Ausdruck Schmieröl bzw. Oel verwendet. Dieser Ausdruck soll aber auch chemisch hergestellte, flüssige Schmierstoffe, die nicht mehr unter den chemischen Begriff der Oele fallen, umfassen.

Die Erfindung sei im Folgenden an Hand von Ausführungsbeispielen und der Figuren der Zeichnung näher erläutert. In der letztern ist

Fig. 1 eine schematische Darstellung eines Längsschnitts einer erfindungsgemässen Anordnung,

Fig. 2 eine Ausführungsform mit einer Mehrzahl von Rohrleitungen.

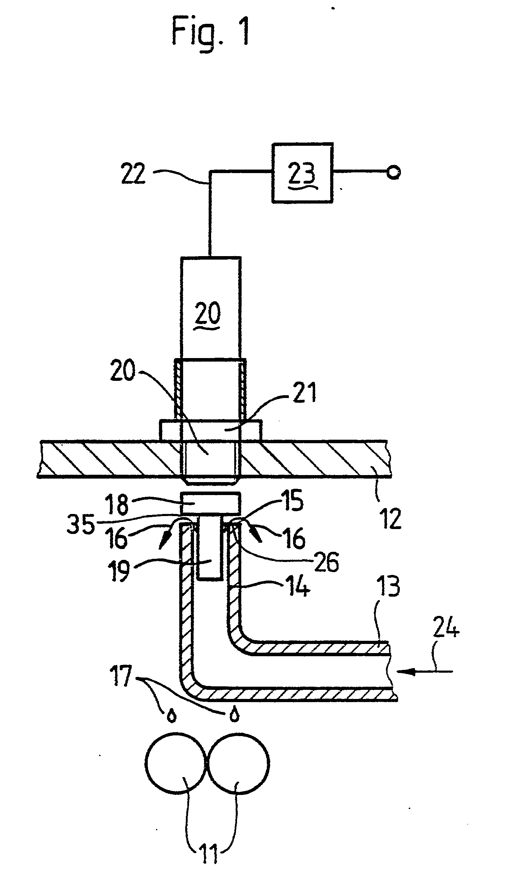

Fig. 1 zeigt ein zu schmierendes Getriebe bzw. eine Schmierstelle 11, welche mit einem Schmieröl geschmiert wird. Die Schmierstelle 11 befindet sich im Innern eines Gehäuses, von welchem nur ein Teil der Gehäusewand 12 gezeichnet ist. Das Oel wird von einem nicht gezeichneten Oelvorrat durch eine Rohrleitung 13 gefördert. Die Rohrleitung 13 weist ein gerades Endstück 14 auf, dessen freies Ende eine Ausflussöffnung 15 bildet. Durch die Pfeile 16 und Tropfen 17 ist der Weg des herausfliessenden Oels angezeigt.

Im Innern des Endstückes 14 befindet sich ein mit einem Kopf 18 versehener Stift 19. Der Kopf 18 ist über der Ausflussöffnung 15 ausserhalb der Rohrleitung plaziert. Der Stift 19 ist in das Endstück 14 eingetaucht und in seiner Längsrichtung verschiebbar.

Oberhalb des Kopfs 18 ist ein Detektorelement 20 vorhanden. Dieses ist mittels einer Schraubenbefestigung 21 an der Gehäusewand 12 festgemacht. Das Element 20 enthält elektrische Mittel, mit denen ein Signal erzeugt wird, welches vom gegenseitigen Abstand des Kopfes 18 und des Elements 20 abhängig ist. Dieses Signal wird über eine elektrische Leitung 22 einer Anlage 23 zugeführt, in der es das Erzeugen einer Anzeige von wählbarer, gewünschter Art bewirkt.

Im Betrieb der Anordnung gemäss Fig. 1 wird mittels einer nicht gezeichneten Pumpe Schmieröl in der durch den Pfeil 24 angegebenen Strömungsrichtung durch die Rohrleitung 13 bewegt. Dieses Oel fliesst im Endstück 14 durch den Zwischenraum zwischen dessen Innenwand und dem Stift 19 hindurch und tritt an der Ausflussöffnung 15 durch den Spalt 35 aus dem Endstück 14 aus. Von dort fliesst es, wie durch die Pfeile 16 gezeigt, längs der Aussenwand des Endstücks 14 nach unten und gelangt, je nach den Anforderungen, als dünner Strahl, oder, wie angedeutet, in Form von Tropfen, auf die Schmierstelle 11.

Das durch die Leitung 13 fliessende Oel bewirkt ein Anheben des Stiftes 1g. Dieses Anheben erfolgt als Folge des von der Oelpumpe erzeugten Oeldrucks. Falls der Oelfluss aus irgend einem Grund unterbrochen ist, fliesst kein Oel mehr aus der Oeffnung 15 heraus. Damit senkt sich der Stift 19 mit dem Kopf 18 durch sein Eigengewicht nach unten und gelangt zur Auflage auf die an der Ausslussöffnung 15 vorhandene Stirnseite 26 des Endstückes 14.

Im Element 20 ist z.B. ein an sich bekanntes elektrisches Kondensatormittel eingebaut, dessen Kapazität von der Entfernung des Kopfes 18 vom Element 20 abhängig ist, d.h. durch Verändern dieser Entfernung verändert wird. Ein von diesen Veränderungen abhängiges, elektrisches Signal gelangt über die Leitung 22 zur Anlage 23. Diese liefert eine akustische und/oder optische Anzeige oder bewirkt z.b. ein Abstellen des Getriebes bzw. der Maschine, sobald das durch die Leitung 22 übertragene Signal das Ueberschreiten einer vorgegebenen Grösse des gegenseitigen Abstands der Teile 18, 20 anzeigt.

An Stelle von kapazitiven Veränderungen eines im Element 20 eingebauten, elektrischen Kondensatormittels können z.B. Veränderungen eines im Element 20 eingebauten, an sich bekannten elektrischen Induktionsmittels zum Messen des gegenseitigen Abstands benützt werden. Ein weiteres Beispiel zum Erzeugen eines Signales bei einen vorgegebenen Wert überschreitendem Abstand der Teile 18, 20 ist eine Ausführungsform, bei der durch die Bewegung des Kopfes 18 ein unmittelbarer elektrischer Kontakt zwischen den Teilen 18 und 20 gebildet: wird. Dabei wird im Detektorelement 20 durch einen dadurch fliessenden bzw. unterbrochenen Strom ein Signal gebildet, das zu einer Anzeigeanlage geleitet wird. Diese Lösung besitzt jedoch den Nachteil gegenüber der in vorherigen beschriebenen Lösung mittels eines berührungslosen Kontakts, dass wegen der Anwesenheit des Oels die Zuverlässigkeit der Signalbildung vermindert ist.

Bei den gezeigten Beispielen ist es von Vorteil, wenn der Kopf 18 die Ausslussöffnung 15 und auch die Stirnseite 26 des Endstückes 14 überdeckt, weil bei dieser Ausgestaltung die Stirnseite 26 mit der ihr zugewandten Deckfläche des Kopfes 18 einen klar definierten Spalt 35 bildet, von dessen Dicke das Bilden eines Signals bzw. einer Anzeige abhängig ist.

Es können verschiedene Arten von Annäherungsdetektoren zum Messen der Spaltdicke verwendet werden. Von besonderem Vorteil für die Verwendung in vorliegender Ueberwachungsanordnung ist ein berührungsloser Näherungsschalter, wie dies an Hand des Beispiels der Fig. 1 im Vorhergehenden beschrieben wurde.

Die Rohrleitung 13, das Endstück 14, der Stift 19 und der Kopf 18 besitzen aus Gründen der Einfachheit der Herstellung vorzugsweise kreisförmige Querschnitte. In einer solchen, im praktischen Betrieb bewährten Ausführungsform betrug der innere Durchmesser des Endstücks 14 der Rohrleitung 13 ungefähr 4 Millimeter und der Durchmesser des Stiftes 19 ungefähr 3 Millimeter, was eine genügende Zentrierung des Stiftes 19 gewährleistet.

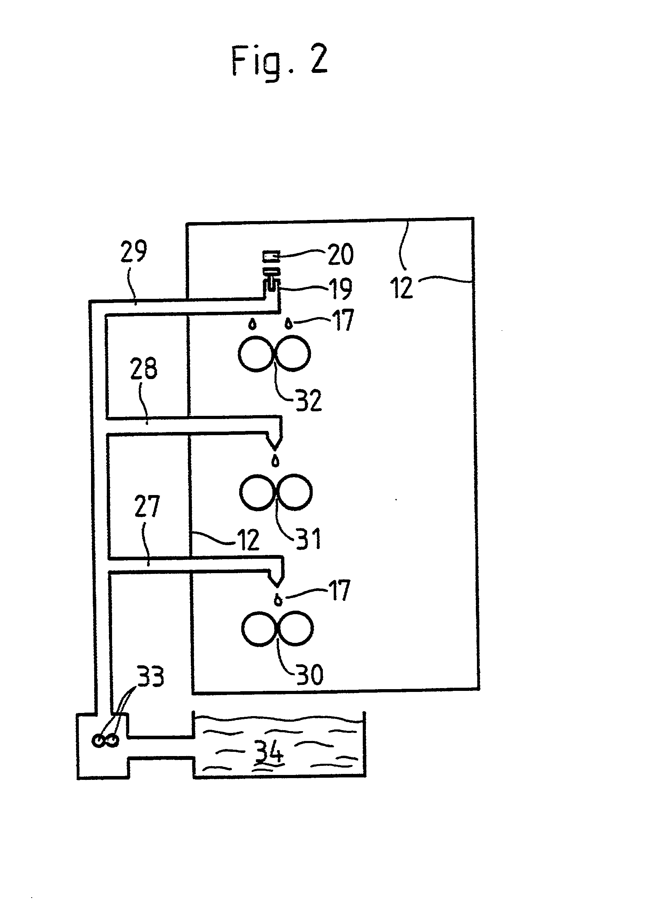

Das Ausführungsbeispiel gemäss Fig. 2 weist eine Mehrzahl von Rohrleitungen 27, 28, 29 auf, durch welche zum Schmieren der Schmierstellen 30, 31, 32 dienendes Oel geleitet wird. Die Schmierstellen 30, 31, 32 befinden sich in einem durch Wände 12 begrenzten Gehäuse. Das Oel wird mittels einer Pumpe 33 aus einem Oelbehälter 34 entnommen und durch die Rohrleitungen 27, 28, 29 gefördert.

Zur Ueberwachung des Vorhandenseins eines Oelflusses ist an der Austrittsstelle der Rohrleitung 29 eine entsprechend der Fig. 1 oder Fig. 2 ausgebildete Ueberwachungsanordnung mit einem Stift 19 und einem Detektorelement 20 vorgesehen. Die Rohrleitungen 27, 28 hingegen weisen düsenartige Ausslussstellen auf, bei denen die ausfliessende Oelmenge durch die Grösse der Ausslussöffnung gegeben ist.

Das Anbringen der Ueberwachungsanordnung an der obersten Rohrleitung 2g hat den Vorteil, dass auf diese Weise gleichzeitig eine Ueberwachung des Oelflusses der Rohre 27, 28 erhalten wird. Solange namlich durch das Rohr 29 Oel gefördert wird, kann angenommen werden, dass in der Regel auch in den Rohren 27, 28 eine Oelförderung vorhanden ist.

## Patentansprüche

1. Anordnung zur Überwachung eines der Schmierung einer Schmierstelle (11) dienenden Ölflusses mit einer zum Fördern von Schmieröl durch eine Rohrleitung (13) dienenden Pumpe (33), wobei die Rohrleitung ein nach oben ausgerichtetes, gerades Endstück (14) mit einer Ausslussöffnung (15) aufweist, welche sich oberhalb der Schmierstelle (11) befindet, wobei ein im Endstück (14) eingetauchter, in Längsrichtung desselben verschiebbarer Stift (19) vorgesehen ist, der an seinem der Ausslussöffnung (15) gelegenen Ende einen Kopf (18) aufweist, der sich ausserhalb des Endstückes (14) befindet und der Stift (19) einer in seiner Eintauchrichtung wirkenden Kraft ausgesetzt ist, wobei in Verlängerung des Stiftes ein Detektorelement (20) angebracht ist, dadurch gekennzeichnet, dass der Kopf (18) die Ausslussöffnung (15) überdeckt und zusammen mit der sich an die Ausslussöffnung (15) befindlichen Stirnseite (26) des Endstückes (14) einen Spalt (35) für das aus dem Endstück fliessende Schmiermittel bildet, wobei die auf den Stift (19) wirkende Kraft durch sein Gewicht gegeben ist, daß das Detektorelement (20) an einer vom Endstück (14) getrennten Gehäusewand (12) eines die Schmierstelle aufnehmenden Gehäuses befestigt ist, und daß das Detektorelement einen Annäherungsdetektor bildet, der beim Überschreiten eines vorgegebenen Wertes des gegenseitigen Abstands des Kopfes (18) und des Elementes (20) die Betätigung einer eine Anzeige liefernden Anlage (23) bewirkt.

2. Anordnung nach Anspruch 1, dadurch gekennzeichnet, dass der Annäherungsdetektor (20) ein berührungsloser Näherungsschalter ist.

3. Anordnung nach Anspruch 2, dadurch gekennzeichnet, dass die Arbeitsweise des Detektors (20) auf der Basis einer vom gegenseitigen Abstand des Kopfes (18) und des Detektorenelementes (20) abhängigen Kapazitätsänderung einer elektrischen Kondensatorenanordnung beruht.

4. Anordnung nach Anspruch 1,
dadurch gekennzeichnet,
dass sich diese, beim Vorliegen einer Mehrzahl von durch die Pumpe (33) gespiesenen Rohrleitungen (27, 28, 29) mit je einer Ausflussöffnung, an der am höchsten gelegenen Ausflussöffnung befindet (Fig. 2).

5. Anordnung nach Anspruch 1,
dadurch gekennzeichnet,
dass bei kreisförmigem Querschnitt des Endstücks (14) und des Stiftes (19) der innere Rohrdurchmesser des Endstücks (14) ungefähr 4 mm und der Durchmesser des Stiftes (19) ungefähr 3 mm beträgt.

## Claims

1. Arrangement for monitoring an oil flow serving for lubrication of a lubrication point (11), comprising a pump (33) for feeding lubricating oil through a pipe (13) having an upwardly directed straight end portion (14) with an outflow opening (15) located above the lubrication point (11), a pin (19) being provided which extends into the end portion (14) and is movable in the longitudinal direction thereof, the pin having a head (18) at its end at the outflow opening (15), the head (18) being located outside the end portion (14), and the pin (19) is subjected to a force acting in the direction inwardly of the end portion, a detector element (20) being located in extension of the pin (19), characterised in that the head (18) covers the outflow opening (15) and forms together with the end face (26) of the end portion (14) at the outflow opening (15) a gap (35) for the lubricant flowing from the end portion, the force exerted on the pin (19) being provided by its weight, in that the detector element (20) is secured to a wall (12) of a housing accommodating the lubrication point, said wall being separated from the end portion (14), and in that the detector element forms a proximity detector which, when the mutual spacing of the head (18) and the element (20) exceeds a predetermined value, causes an installation (23) to be actuated to provide an indication.

2. Arrangement according to claim 1, characterised in that the proximity detector (20) is a contactless proximity switch.

3. Arrangement according to claim 2, characterised in that the mode of operation of the detector (20) is based upon a change in capacitance of an electrical capacitive device dependent upon mutual spacing of the head (18) and the detector element (20).

4. Arrangement according to claim 1, characterised in that where a plurality of pipes (27, 28, 29) are fed by the pump (33) and have respective outflow openings, the arrangement is located at the uppermost outflow opening (Fig. 2).

5. Arrangement according to claim 1, characterised in that where the end portion (14) and the pin (19) have circular sections, the inside diameter of the end portion (14) is approximately 4 mm and the diameter of the pin (19) is approximately 3 mm.

## Revendications

1. Arrangement pour la surveillance d'un écoulement d'huile servant à lubrifier un point de lubrification (11) avec une pompe (33) servant à transporter l'huile de lubrification à l'aide d'une conduite (13), arrangement dans lequel la conduite possède une partie terminale (14), dirigée vers le haut, ayant une ouverture d'écoulement (15) qui se trouve au-dessus du point de lubrification (11), et où un goujon (19) est prévu plongeant dans la partie terminale (14) et déplaçable dans le sens longitudinal de celle-ci, et qui possède une tête (18) sur son extrémité située vers l'ouverture d'écoulement (15), tête se trouvant en dehors de la partie terminale (14), et le goujon (19) est soumis à une force qui agit dans son sens de plongée, et où un élément de détection (20) est disposé dans le prolongement du goujon, caractérisé par le fait que la tête (18) recouvre l'ouverture d'écoulement (15) et forme, conjointement avec la face frontale (26) de la partie terminale (14) se trouvant sur l'ouverture d'écoulement (15), un espace (35) pour l'écoulement du moyen de lubrification sortant de la partie terminale, et où la force agissant sur le goujon (19) est donnée par son propre poids, que l'élément de détection (20) est fixé à une paroi de carter (12) d'un carter de réception du point de lubrification, paroi qui est séparée de la partie terminale (14), et que l'élément de détection forme un détecteur de proximité qui, lorsqu'une grandeur prédéterminée de la distance réciproque entre la tête (18) et l'élément (20) est dépassée, provoque l'actionnement d'une installation (23) délivrant une indication.

2. Arrangement selon revendication 1, caractérisé par le fait que le détecteur de proximité (20) est un interrupteur de proximité sans contact.

3. Arrangement selon revendication 2, caractérisé par le fait que le mode de travail du détecteur (20) repose sur la base d'un changement de capacité d'un arrangement de condensateurs électriques, changement qui est dépendant de la distance réciproque entre la tête (18) et l'élément de détection (20).

4. Arrangement selon revendication 1, caractérisé par le fait que celui-ci se trouve à l'ouverture d'écoulement située le plus haut (figure 2), lorsqu'il y a une pluralité de conduites (27, 28, 29) qui sont alimentées par la pompe (33), et chacune des conduites possédant une ouverture d'écoulement.

5. Arrangement selon revendication 1, caractérisé par le fait que, avec une section circulaire de la partie terminale (14) et du goujon (19), le diamètre intérieur de tube de la partie terminale (14) est d'environ 4 mm et le diamètre du goujon (19) est d'environ 3 mm.

# Fig. 1

# Fig. 2